# EUROPÄISCHE PATENTSCHRIFT

(11) **EP 1 191 342 B1**
(45) Veröffentlichungstag und Bekanntmachung des Hinweises auf die Patenterteilung: **31.10.2007**
(21) Anmeldenummer: 01122192.6
(22) Anmeldetag: 17.09.2001
(51) Int. Cl.: G01R 31/28, H04N 17/04

(54) **Verfahren und Vorrichtung zur Funktionsprüfung einer Anzeigeeinrichtung eines medizinisch-technischen Gerätes**
Method and apparatus for testing the function of a display of a medical-technical device
Procédé et dispositif pour tester la fonction d'un affichage d'un appareil technique médical

(30) Priorität: 20.09.2000 DE 10046845
(43) Veröffentlichungstag der Anmeldung: 27.03.2002
(73) Patentinhaber: Fresenius Medical Care Deutschland GmbH, 61346 Bad Homburg (DE)
(72) Erfinder: Pfeuffer, Matthias, 97714 Ebenhausen (DE); Spickermann, Reiner, 97535 Wasserlosen-Burghausen (DE); Menninger, Stefan, 97076 Würzburg (DE); Ender, Helmut, 97475 Zell am Main (DE); Balschat, Klaus, 97525 Schwebheim (DE); Stöhlein, Dieter, 97509 Herlheim (DE)
(74) Vertreter: Wieske, Thilo

(56) Entgegenhaltungen:
- EP-A- 0 672 933
- US-A- 4 342 906
- US-A- 5 351 201
- US-A- 5 406 301
- US-A- 5 850 205
- "DISPLAY ERROR-SENSING DEVICE" IBM TECHNICAL DISCLOSURE BULLETIN, IBM CORP. NEW YORK, US, Bd. 32, Nr. 12, 1. Mai 1990 (1990-05-01), Seiten 173-175, XP000105316 ISSN: 0018-8689

## Beschreibung

Die Erfindung betrifft ein Verfahren zur Funktionsprüfung einer Anzeigeeinrichtung eines medizinisch-technischen Gerätes nach dem Oberbegriff des Patentanspruchs 1 sowie ein medizinisch-technisches Gerät nach dem Oberbegriff des Patentanspruchs 11.

Es ist bekannt, bestimmte medizinisch-technische Geräte mit einer Anzeigeeinrichtung zu versehen. Eine solche Anzeigeeinrichtung kann beispielsweise ein Bildschirm in Form einer Kathodenstrahlröhre sein oder ein Flachbildschirm (LCD, TFT). Derartige Anzeigeeinrichtungen bei medizinisch-technischen Geräten werden beispielsweise in der Notfallmedizin eingesetzt, um Herzschlag und Atmung sichtbar zu machen. Weiterhin ist der Einsatz derartiger Anzeigeeinrichtungen bei Dialyse-Geräten bekannt, um Angaben über die erfolgte Behandlung darzustellen. Weiterhin ist bekannt, dass medizinisch-technische Geräte ein Alarmsignal abgeben, wenn aufgrund der aufgenommenen Messsignale beim Patienten ein Zustand festgestellt wird, der ein Eingreifen erforderlich macht. Ein Alarmsignal kann auch ausgegeben werden, wenn das Gerät bei einer Prüfung seiner eigenen Funktion einen Gerätefehler feststellt.

Aus der US-PS 5,406,301 ist ein medizinisch technisches Gerät bekannt, bei dem eine Anzeigeeinrichtung mittels Leuchtdioden realisiert ist. Diese Anzeigeeinrichtung kann dort einer Funktionsprüfung unterzogen werden, indem bestimmte Anzeigezustände angesteuert werden. Gleichzeitig wird der resultierende Spannungsabfall gemessen. Auf Grund des angesteuerten Anzeigezustandes ist es bekannt, wie viele Dioden bei ordnungsgemäßer Funktion leuchten müssten. Daraus lässt sich ein Erwartungswert für den Spannungsabfall ermitteln Wenn der gemessene Spannungsabfall von dem Erwartungswert abweicht, wird eine Alarmeinrichtung angesteuert.

Aus der Veröffentlichung "DISPLAY ERROR-SENSTNG DEVICE"; IBM TECHNICAL DISCLOSURE BULLETIN der IBM CORP: NEW YORK, US Bd. 32, Nr. 12 vom 1. Mai 1990, Seiten 173-175 mit der ISSN: 0018-8689 ist es bekannt, einen Bildschirm zu dessen Funktionstest mit einem Referenzsignal zu beaufschlagen und die Bildschirmanzeige auszuwerten, ob diese dem entspricht, was auf Grund des Referenzsignals erwartet werden kann. Sofern dabei ein Fehler erkannt wird, erfolgt ein Eintrag in einen Fehlerspeicher.

Der vorliegenden Erfindung liegt die Aufgabenstellung zugrunde, den Hinweis auf Fehlfunktionen des medizinisch-technischen Gerätes zu verbessern.

Erfindungsgemäß wird diese Aufgabe nach Anspruch 1 gelöst, wonach zumindest ein Teil der Anzeigeeinrichtung mit einem Referenzsignal angesteuert wird, wobei von der Anzeigeeinrichtung bei ordnungsgemäßer Funktion bei einer Ansteuerung mit dem Referenzsignal ein von dem Referenzsignal abhängiges Reaktionssignal ausgegeben wird, wobei mittels einer Sensoreinrichtung das Auftreten des Reaktionssignals überwacht wird, wobei eine nicht ordnungsgemäße Funktion der Anzeigeeinrichtung erkannt wird, wenn von der Sensoreinrichtung kein Signal sensiert wird oder ein von dem erwarteten Reaktionssignal abweichendes Signal. Wenn eine nicht ordnungsgemäße Funktion erkannt wird, wird ein Alarmsignal ausgegeben.

Die Alarmsignale können beispielsweise optisch oder akustisch ausgegeben werden. ,

Dies erweist sich beispielsweise als einfach durchführbar, wenn von dem medizinisch-technischen Gerät ohnehin Alarmsignale ausgebbar sind, die beispielsweise bei bestimmten erkannten gesundheitlichen Zuständen des Patienten ausgebbar sind oder die eine eventuell erkannte anderweitige Funktionsstörung des medizinisch-technischen Gerätes betreffen.

Erfindungsgemäß wird also unabhängig von den anzuzeigenden Informationen ein Testsignal als Referenzsignal zur Ansteuerung an die Anzeigeeinrichtung gesandt, mit dem die Funktionsfähigkeit prüfbar wird. Durch die Verwendung der Sensoreinrichtung kann eine Funktionsstörung auch dann erkannt werden, wenn die Anzeigeeinrichtung momentan gerade nicht durch eine Bedienungsperson beobachtet wird und somit in dieser Situation ein Ausfall durch die Bedienungsperson selbst nicht unmittelbar erkannt werden kann.

Bei der Ausgestaltung des Verfahrens nach Anspruch 2 wird nur ein Teil der Anzeigeeinrichtung mit dem Referenzsignal angesteuert.

Beispielsweise kann dieser Teil in einem für eine Bedienungsperson des medizinisch-technischen Gerätes nicht sichtbaren Teil der Anzeigeeinrichtung liegen. Dies kann beispielsweise so realisiert sein, dass die sichtbare Fläche der Anzeigeeinrichtung durch einen Rahmen begrenzt wird. Die ansteuerbare Fläche der Anzeigeeinrichtung ist aber so groß, dass ein Teil dieser ansteuerbaren Fläche unter dem Rahmen liegt. Die Sensoreinrichtung kann dann in den Rahmen integriert werden, so dass sich für die Anzeigeeinrichtung ein ansprechendes Erscheinungsbild ergibt, wenn die Sensoreinrichtung als selbständige Einrichtung von einer Bedienungsperson nicht wahrnehmbar ist.

Vorteilhaft kann also bei der Ausgestaltung nach Anspruch 2 ein Teil der Anzeigeeinrichtung verwendet werden, um das Reaktionssignal abhängig von dem Referenzsignal auszugeben. Unabhängig von dieser dauernden Funktionsprüfung können auf dem übrigen Teil der Fläche der Anzeigeeinrichtung relevante Informationen angezeigt werden.

Bei der Ausgestaltung des Verfahrens nach Anspruch 3 ist das Referenzsignal ein gepulstes Signal.

Dadurch kann vorteilhaft weiter überprüft werden, ob die Anzeigeeinrichtung auch in der Lage ist, Änderungen der Darstellung zu folgen oder ob eventuell eine Funktionsstörung dahingehend vorliegt, dass sich ein Bild "eingebrannt" hat.

Je nach Pulsfrequenz und Pulsdauer ist es beispielsweise möglich, ein Reaktionssignal so zu erhalten, dass dieses wegen der Kürze der Pulsdauer und damit wegen der Kürze der Anzeige des Reaktionssignals für eine Bedienungsperson nicht wahrnehmbar ist. In diesem Fall ist es beispielsweise möglich, ein Reaktionssignal zu erzeugen, das über die gesamte sichtbare Fläche der Anzeigeeinrichtung ausgegeben wird, ohne dass es zu einer Beeinträchtigung der Brauchbarkeit der Anzeigeeinrichtung zur Anzeige relevanter Zustände des medizinisch-technischen Gerätes kommt. Für die Bedienungsperson sind dann nach wie vor nur die relevanten Daten erkennbar.

Ps ist aber auch möglich, ein gepulstes Referenzsignal vorzusehen, wenn damit nur ein Teil der Fläche der Anzeigeeinrichtung angesteuert wird. Versuche haben dabei ergeben, dass eine sinnvolle Funktionsprüfung erfolgen kann, indem vier Pixel eines Bildschirms mit Pulsen der Länge von einer Sekunde angesteuert werden, während denen diese Pixel hell und dunkel geschaltet werden.

Bei dem Verfahren nach Anspruch 4 ist ein Bildschirmschoner vorgesehen, wobei der Bildschirmschoner durch das Referenzsignal nicht deaktiviert wird und wobei das Reaktionssignal auch bei aktiviertem Bildschirmschoner ausgegeben wird.

Diese sogenannten Bildschirmschoner sind bekannt. Zur Vermeidung des "Einbrennens" in die Anzeigeeinrichtung von anzuzeigenden Bildern, die keiner oder einer allenfalls geringen zeitlichen Änderung unterliegen, ist es bekannt, sogenannte "Bildschirmschoner" zu aktivieren, wenn für eine bestimmte Zeitdauer keine Eingabe in das Gerät erfolgte. Diese Bildschirmschoner können beispielsweise darin bestehen, dass die Anzeigeeinrichtung dunkel geschaltet wird. Ebenso ist es bekannt, als Bildschirmschoner sich zeitlich ändernde Symbole oder sonstige Elemente anzuzeigen, um das Einbrennen von statischen Bildern zu vermeiden. Der Begriff "Bildschirmschoner" ist allgemein gebräuchlich und soll im hier vorliegenden Zusammenhang nicht beschränkend auf Bildschirme von Kathodenstrahlröhren verstanden werden. Vielmehr spielen solche Bildschirmschoner beispielsweise auch bei LCD-Displays eine Rolle, da auch dort das Problem des Einbrennens statischer Bilder besteht. Diese Bildschirmschoner werden dort also entsprechend eingesetzt.

Nach der Aktivierung eines Bildschirmschoners kann dieser also durch eine Ansteuerung der Anzeigeeinrichtung mit einem von dem bisher anzuzeigenden Bild abweichenden Bild wieder deaktiviert werden. Nach der Ausgestaltung nach Anspruch 4 soll aber ein aktivierter Bildschirmschoner durch die Funktionsüberprüfung der Anzeigeeinrichtung nach der vorliegenden Erfindung nicht wieder deaktiviert werden. Dies bedeutet, dass das Referenzsignal nicht zu einer Deaktivierung des Bildschirmschoners führt. Weiterhin bedeutet dies, das; das Reaktionssignal ausgegeben wird, unabhängig davon, ob mittels des Bildschirmschoners sonst ein anderes Bild angezeigt wird oder ob die Anzeigeeinrichtung durch den Bildschirmschoner sonst dunkel geschaltet wird.

Bei der Ausgestaltung des Verfahrens nach Anspruch 5 wird bei einer erkannten nicht ordnungsgemäßen Funktion der Anzeigeeinrichtung über die Einrichtung zur Ausgabe des Alarmsignals eine Benutzerführung zum Weiterbetrieb des medizinisch-technischen Geräts realisiert.

Indem die Einrichtung zur Ausgabe des Alarmsignals entsprechend genutzt wird, kann eine Benutzer-Maschine-Schnittstelle geschaffen werden, durch die zumindest in einem Notbetrieb das medizinisch-technische Gerät bedienbar bleibt. Vorteilhaft sind dabei keine zusätzlichen Kosten für eine Informationsausgabeeinrichtung aufzuwenden, wenn das medizinisch-technische Gerät ohnehin über eine Einrichtung zur Ausgabe eines Alarmsignals verfügt.

Vorteilhaft wird dabei das Alarmsignal akustisch ausgegeben, so dass dann die weitere Benutzerführung akustisch durch eine Sprachausgabe erfolgt.

Bei der Ausgestaltung nach Anspruch 6 werden dem Benutzer Einstellmöglichkeiten von Eingabemitteln beim Weiterbetrieb des medizinisch-technischen Geräts über die Einrichtung zur Ausgabe des Alarmsignals mitgeteilt.

Dies erweist sich als vorteilhaft, wenn sich Einstellmöglichkeiten ändern, wenn die Funktionsstörung erkannt wurde. Dies kann beispielsweise erfolgen, wenn das medizinisch-technische Gerät bei einem erkannten Ausfall der Anzeigeeinrichtung in einen Notbetrieb umschaltet. Dem Benutzer können dann die entsprechenden Einstellmöglichkeiten mitgeteilt werden.

Bei der Ausgestaltung des Verfahrens nach Anspruch 7 weist zumindest beim Weiterbetrieb ein Eingabemittel eine Bestätigungsfunktion auf, wobei eine Einstellung aufgrund einer vorherigen Betätigung eines anderen Eingabemittels erst ausgeführt wird, wenn diese Einstellung dem Benutzer über die Einrichtung mitgeteilt wurde und der Benutzer darauf hin das Eingabemittel mit der Bestätigungsfunktion betätigt hat.

Dadurch kann vorteilhaft die Sicherheit bei der Bedienung des medizinisch-technischen Geräts beim Weiterbetrieb nach einer erkannten Funktionsstörung verbessert werden. Nachdem über die entsprechenden Eingabemittel eine Einstellung vorgegeben wurde, wird diese durch die Benutzerführung nochmals mitgeteilt und erst ausgeführt, wenn diese bestätigt wurde.

Bei der Ausführungsform nach Anspruch 8 werden dem Benutzer beim Weiterbetrieb über die Einrichtung zur Ausgabe des Alarmsignals Handlungsanweisungen gegeben, wobei der Benutzer die Ausführung der entsprechenden Handlungen durch eine Betätigung eines Eingabemittels mit einer Bestätigungsfunktion bestätigt.

Dadurch können vorteilhaft auch Eingriffe des Benutzers in Einstellungen vorgenommen werden, die in zeitlichen Zusammenhang mit dem Betriebsablauf des medizinisch-technischen Gerätes zu bringen sind. Dies kann beispielsweise das Verlegen von Infusionsschläuchen oder ähnliches betreffen. Nach Durchführung der entsprechenden Arbeiten kann dies bestätigt werden, so dass dann das medizinisch-technische Gerät seinen Betrieb fortsetzen kann.

Bei der Ausgestaltung des Verfahrens nach Anspruch 9 besteht die Anzeigeeinrichtung aus einem LCD-Display Im Randbereich der Anzeigeeinrichtung sind Betätigungselemente angeordnet, deren Schaltfunktion auf der Anzeigeeinrichtung darstellbar ist, wobei auf der Anzeigeeinrichtung eine Darstellung von Funktionen dieser Betätigungselemente erfolgt, die deren Funktionen im Weiterbetrieb des medizinisch-technischen Gerätes nach einer erkannten Funktionsstörung der Anzeigeeinrichtung entsprechen, wenn die Anzeigeeinrichtung nicht mit einem Steuersignal angesteuert wird bzw. nicht mit Spannung versorgt wird.

In diesem LCD-Display kann vorgesehen werden, dass ohne Anliegen einer Versorgungsspannung bzw. ohne Anliegen eines Steuersignals auf dem LCD-Display bestimmte Symbole dargestellt werden, die nicht sichtbar sind, wenn das LCD-Display entsprechend angesteuert wird. Für den Normalbetrieb können also durch entsprechende Steuersignale über das LCD-Display entsprechende Informationen ausgegeben werden. Wenn bei Erkennen einer Fehlfunktion der Anzeigeeinrichtung ein Notbetrieb eingeleitet werden soll, bei dem mit den Betätigungselementen im Randbereich der Anzeigeeinrichtung bestimmte, definierte Funktionen schaltbar sind, können die entsprechenden Funktionen am Rand der Anzeigeeinrichtung in Zuordnung zu dem jeweiligen Betätigungselemente dargestellt werden, wenn die Anzeigeeinrichtung nicht mit Spannung versorgt wird und/oder nicht angesteuert wird. Dazu kann beispielsweise der Hintergrund des LCD-Displays mit entsprechenden Symbolen versehen werden, die die entsprechenden Funktionen der Betätigungselemente im Notbetrieb darstellen. Wenn also dann im Notbetrieb die Anzeigeeinrichtung nicht mehr ansteuerbar ist, werden die entsprechenden Funktionen sichtbar. Bei einer Ansteuerung des LCD-Displays im Normalbetrieb wird die Darstellung des Hintergrundes überdeckt, so dass andere Symbole oder Informationen auf dem LCD-Display darstellbar sind.

Bei dem Verfahren nach Anspruch 10 verfügt das medizinisch-technische Gerät über eine Spracherkennungsschnittstelle, die dauernd aktiviert ist, vom Benutzer aktivierbar ist oder von dem medizinisch-technischen Gerät aktivierbar ist, über die das medizinisch-technische Gerät durch entsprechende Sprachbefehle steuerbar ist.

Dadurch kann beispielsweise nach einem Ausfall der Anzeigeeinrichtung eine Spracherkennungsschnittstelle aktiviert werden, über die dann die weitere Steuerung des medizinisch-technischen Geräts vorgenommen wird. Diese Aktivierung kann von dem Gerät selbst nach dem Erkennen der Fehlfunktion des Anzeigegeräts veranlasst werden. Diese Aktivierung kann auch von einer Bedienungsperson über einen dafür vorgesehenen Schalter vorgenommen werden. Es ist auch möglich, dass das medizinisch-technische Gerät auch im Normalbetrieb über diese Spracherkennungsschnittstelle gesteuert wird.

Gemäß einer erfindungsgemäßen Ausgestaltung eines medizinisch-technischen Gerätes mit einer Anzeigeeinrichtung sowie einer Alarmeinrichtung ist gemäß Anspruch 11 durch das medizinisch-technische Gerät eine Funktionsprüfung der Anzeigeeinrichtung durchführbar, wobei im Falle einer negativen Funktionsprüfung der Anzeigeeinrichtung eine Alarmeinrichtung ansteuerbar ist im Sinne einer Ausgabe eines Alarmsignals. Erfindungsgemäß ist nach Anspruch 1 zumindest ein Teil der Anzeigeeinrichtung mit einem Referenzsignal ansteuerbar, wobei von der Anzeigeeinrichtung bei ordnungsgemäßer Funktion bei einer Ansteuerung mit dem Referenzsignal ein von dem Referenzsignal abhängiges Reaktionssignal ausgebbar ist, wobei mittels einer Sensoreinrichtung das Auftreten des Reaktionssignals überwacht wird, wobei eine nicht ordnungsgemäße Funktion der Anzeigeeinrichtung erkennbar ist, wenn von der Sensoreinrichtung kein Signal öder ein von dem erwarteten Reaktionssignal abweichendes Signal sensiert wird.

Vorteilhaft kann dadurch bei einem medizinisch-technischen Gerät frühzeitig ein Ausfall der Anzeigeeinrichtung erkannt werden bevor es bei einer Behandlung eventuell zu Problemen kommt, weil das medizinische Personal den Funktionszustand des Gerätes nicht mehr erkennen kann, wenn die Kenntnis dieses Funktionszustands notwendig ist für die weitere Bedienung des Gerätes zur Fortführung der Behandlung oder um die Behandlung zu einem definierten Abschluss zu bringen.

Vorteilhaft sind derartige medizinisch-technische Geräte bereits mit entsprechenden Alarmeinrichtungen ausgerüstet, um Alarmsignale bei erkannten Fehlfunktionen ausgeben zu können. Es ist dann also kein Mehraufwand bei der hardwareseitigen Ausrüstung des medizinisch-technischen Geräts notwendig.

Bleibt also bei dem Gerät entsprechend Anspruch 11 das Reaktionssignal also vollständig aus oder wird ein Reaktionssignal ausgegeben, das nicht dem "Sollsignal" entspricht, wird eine mögliche Funktionsstörung der Anzeigeeinrichtung erkennbar. Durch die Verwendung der Sensoreinrichtung wird eine Funktionsstörung frühzeitig unabhängig davon erkannt, dass eine Bedienungsperson die Anzeigeeinrichtung gerade beobachtet.

Bei der Ausgestaltung nach Anspruch 12 ist nur ein Teil der Anzeigeeinrichtung mit dem Referenzsignal ansteuerbar.

Beispielsweise kann dieser Teil in einem für eine Bedienungsperson des medizinisch-technischen Gerätes nicht sichtbaren Teil der Anzeigeeinrichtung liegen. Dies kann beispielsweise so realisiert sein, dass die sichtbare Fläche der Anzeigeeinrichtung durch einen Rahmen begrenzt wird. Die ansteuerbare Fläche der Anzeigeeinrichtung ist aber so groß, dass ein Teil dieser ansteuerbaren Fläche unter dem Rahmen liegt. Die Sensoreinrichtung kann dann in den Rahmen integriert werden, so dass sich für die Anzeigeeinrichtung ein ansprechendes Erscheinungsbild ergibt, wenn die Sensoreinrichtung als selbständige Einrichtung von einer Bedienungsperson nicht wahrnehmbar ist.

Vorteilhaft kann bei der Ausgestaltung nach Anspruch 12 ein Teil der Anzeigeeinrichtung verwendet werden, um das Reaktionssignal abhängig von dem Referenzsignal auszugeben. Unabhängig von dieser dauernden Funktionsprüfung können auf dem übrigen Teil der Fläche der Anzeigeeinrichtung relevante Informationen angezeigt werden.

Bei der Ausführungsform des medizinisch-technischen Geräts nach Anspruch 13 ist das Referenzsignal ein gepulstes Signal.

Dadurch kann vorteilhaft weiter überprüft werden, ob die Anzeigeeinrichtung auch in der Lage ist, Änderungen der Darstellung zu folgen oder ob eventuell eine Funktionsstörung dahingehend vorliegt, dass sich ein Bild "eingebrannt" hat.

Je nach Pulsfrequenz und Pulsdauer ist es beispielsweise möglich, ein Reaktionssignal so zu erhalten, dass dieses wegen der Kürze der Pulsdauer und damit wegen der Kürze der Anzeige des Reaktionssignals für eine Bedienungsperson nicht wahrnehmbar ist. In diesem Fall ist es beispielsweise möglich, ein Reaktionssignal zu erzeugen, das über die gesamte sichtbare Fläche der Anzeigeeinrichtung ausgegeben wird, ohne dass es zu einer Beeinträchtigung der Brauchbarkeit der Anzeigeeinrichtung zur Anzeige relevanter Zustände des medizinisch-technischen Gerätes kommt. Für die Bedienungsperson sind dann nach wie vor nur die relevanten Daten erkennbar.

Es ist aber auch möglich, ein gepulstes Referenzsignal vorzusehen, wenn damit nur ein Teil der Fläche der Anzeigeeinrichtung angesteuert wird. Versuche haben dabei ergeben, dass eine sinnvolle Funktionsprüfung erfolgen kann, indem vier Pixel eines Bildschirms mit Pulsen der Länge von einer Sekunde angesteuert werden, während denen diese Pixel hell und dunkel geschaltet werden.

Gemäß Anspruch 14 ist bei der Anzeigeeinrichtung des medizinisch-technischen Geräts ein Bildschirmschoner vorgesehen, wobei der Bildschirmschoner durch das Referenzsignal nicht deaktiviert wird und wobei das Reaktionssignal auch bei aktiviertem Bildschirmschoner ausgegeben wird.

Diese sogenannten Bildschirmschoner sind bekannt. Zur Vermeidung des "Einbrennens" in die Anzeigeeinrichtung von anzuzeigenden Bildern, die keiner oder einer allenfalls geringen zeitlichen Änderung unterliegen, ist es bekannt, sogenannte "Bildschirmschoner" zu aktivieren, wenn für eine bestimmte Zeitdauer keine Eingabe in das Gerät erfolgte. Diese Bildschirmschoner können beispielsweise darin bestehen, dass die Anzeigeeinrichtung dunkel geschaltet wird. Ebenso ist es bekannt, als Bildschirmschoner sich zeitlich ändernde Symbole oder sonstige Elemente anzuzeigen, um das Einbrennen von statischen Bildern zu vermeiden. Der Begriff "Bildschirmschoner" ist allgemein gebräuchlich und soll im hier vorliegenden Zusammenhang nicht beschränkend auf Bildschirme von Kathodenstrahlröhren verstanden werden. Vielmehr spielen solche Bildschirmschoner beispielsweise auch bei LCD-Displays eine Rolle, da auch dort das Problem des Einbrennens statischer Bilder besteht. Diese Bildschirmschoner werden dort also entsprechend eingesetzt.

Nach der Aktivierung eines Bildschirmschoners kann dieser also durch eine Ansteuerung der Anzeigeeinrichtung mit einem von dem bisher anzuzeigenden Bild abweichenden Bild wieder deaktiviert werden. Nach der Ausgestaltung nach Anspruch 14 soll aber ein aktivierter Bildschirmschoner durch die Funktionsüberprüfung der Anzeigeeinrichtung nach der vorliegenden Erfindung nicht wieder deaktiviert werden. Dies bedeutet, dass das Referenzsignal nicht zu einer Deaktivierung des Bildschirmschoners führt. Weiterhin bedeutet dies, dass das Reaktionssignal ausgegeben wird, unabhängig davon, ob mittels des Bildschirmschoners sonst ein anderes Bild angezeigt wird oder ob die Anzeigeeinrichtung durch den Bildschirmschoner sonst dunkel geschaltet wird.

Gemäß Anspruch 15 ist bei einem medizinisch-technischen Gerät bei einer erkannten nicht ordnungsgemäßen Funktion der Anzeigeeinrichtung über die Einrichtung zur Ausgabe des Alarmsignals eine Benutzerführung zum Weiterbetrieb des medizinisch-technischen Geräts durchführbar.

Indem die Einrichtung zur Ausgabe des Alarmsignals entsprechend genutzt wird, kann eine Benutzer-Maschine-Schnittstelle geschaffen werden, durch die zumindest in einem Notbetrieb das medizinisch-technische Gerät bedienbar bleibt. Vorteilhaft sind dabei keine zusätzlichen Kosten für eine Informationsausgabeeinrichtung aufzuwenden, wenn das medizinisch-technische Gerät ohnehin über eine Einrichtung zur Ausgabe eines Alarmsignals verfügt. Vorteilhaft wird dabei das Alarmsignal akustisch ausgegeben, so dass dann die weitere Benutzerführung akustisch durch eine Sprachausgabe erfolgt.

Bei einem medizinisch-technischen Gerät nach Anspruch 16 sind dem Benutzer Einstellmöglichkeiten von Eingabemitteln beim Weiterbetrieb des medizinisch-technischen Geräts über die Einrichtung zur Ausgabe des Alarmsignals mitteilbar.

Dies erweist sich als vorteilhaft, wenn sich Einstellmöglichkeiten ändern, wenn die Funktionsstörung erkannt wurde. Dies kann beispielsweise erfolgen, wenn das medizinisch-technische Gerät bei einem erkannten Ausfall der Anzeigeeinrichtung in einen Notbetrieb umschaltet. Dem Benutzer können dann die entsprechenden Einstellmöglichkeiten mitgeteilt werden.

Bei der Ausgestaltung nach Anspruch 17 ist bei dem medizinisch-technischen Gerät zumindest beim Weiterbetrieb einem Eingabemittel eine Bestätigungsfunktion zugeordnet, wobei von dem medizinisch-technischen Gerät eine Einstellung aufgrund einer vorherigen Betätigung eines anderen Eingabemittels erst ausgeführt wird, wenn diese Einstellung dem Benutzer über die Einrichtung mitgeteilt wurde und der Benutzer darauf hin das Eingabemittel mit der Bestätigungsfunktion betätigt hat.

Dadurch kann vorteilhaft die Sicherheit bei der Bedienung des medizinisch-technischen Geräts beim Weiterbetrieb nach einer erkannten Funktionsstörung verbessert werden. Nachdem über die entsprechenden Eingabemittel eine Einstellung vorgegeben wurde, wird diese durch die Benutzerführung nochmals mitgeteilt und erst ausgeführt, wenn diese bestätigt wurde.

Bei dem medizinisch-technischen Gerät nach Anspruch 18 sind dem Benutzer beim Weiterbetrieb über die Einrichtung zur Ausgabe des Alarmsignals Handlungsanweisungen mitteilbar, wobei die Ausführung der entsprechenden Handlungen durch den Benutzer mittels einer Betätigung eines Eingabemittels mit einer Bestätigungsfunktion bestätigbar sind.

Dadurch können vorteilhaft auch Eingriffe des Benutzers in Einstellungen vorgenommen werden, die in zeitlichen Zusammenhang mit dem Betriebsablauf des medizinisch-technischen Gerätes zu bringen sind. Dies kann beispielsweise das Verlegen von Infusionsschläuchen oder ähnliches betreffen. Nach Durchführung der entsprechenden Arbeiten kann dies bestätigt werden, so dass dann das medizinisch-technische Gerät seinen Betrieb fortsetzen kann.

Bei dem medizinisch-technischen Gerät nach Anspruch 19 ist die Anzeigeeinrichtung als LCD-Display ausgestaltet. Es sind Betätigungselemente im Randbereich der Anzeigeeinrichtung angeordnet, deren Schaltfunktion auf der Anzeigeeinrichtung darstellbar ist, wobei auf der Anzeigeeinrichtung eine Darstellung von Funktionen dieser Betätigungselemente erfolgt, die deren Funktionen im Weiterbetrieb des medizinisch-technischen Gerätes nach einer erkannten Funktionsstörung der Anzeigeeinrichtung entsprechen, wenn die Anzeigeeinrichtung nicht mit einem Steuersignal angesteuert wird bzw. nicht mit Spannung versorgt wird.

In diesem LCD-Display kann vorgesehen werden, dass ohne Anliegen einer Versorgungsspannung bzw. ohne Anliegen eines Steuersignals auf dem LCD-Display bestimmte Symbole dargestellt werden, die nicht sichtbar sind, wenn das LCD-Display entsprechend angesteuert wird. Für den Normalbetrieb können also durch entsprechende Steuersignale über das LCD-Display entsprechende Informationen ausgegeben werden. Wenn bei Erkennen einer Fehlfunktion der Anzeigeeinrichtung ein Notbetrieb eingeleitet werden soll, bei dem mit den Betätigungselementen im Randbereich der Anzeigeeinrichtung bestimmte, definierte Funktionen schaltbar sind, können die entsprechenden Funktionen am Rand der Anzeigeeinrichtung in Zuordnung zu dem jeweiligen Betätigungselemente dargestellt werden, wenn die Anzeigeeinrichtung nicht mit Spannung versorgt wird und/oder nicht angesteuert wird. Dazu kann beispielsweise der Hintergrund des LCD-Displays mit entsprechenden Symbolen versehen werden, die die entsprechenden Funktionen der Betätigungselemente im Notbetrieb darstellen. Wenn also dann im Notbetrieb die Anzeigeeinrichtung nicht mehr ansteuerbar ist, werden die entsprechenden Funktionen sichtbar. Bei einer Ansteuerung des LCD-Displays im Normalbetrieb wird die Darstellung des Hintergrundes überdeckt, so dass andere Symbole oder Informationen auf dem LCD-Display darstellbar sind.

Bei dem medizinisch-technischen Gerät nach Anspruch 20 verfügt das medizinisch-technische Gerät über eine Spracherkennungsschnittstelle, die dauernd aktiviert ist, vom Benutzer aktivierbar ist oder von dem medizinisch-technischen Gerät aktivierbar ist, über die das medizinisch-technische Gerät durch entsprechende Sprachbefehle steuerbar ist.

Dadurch kann beispielsweise nach einem Ausfall der Anzeigeeinrichtung eine Spracherkennungsschnittstelle aktiviert werden, über die dann die weitere Steuerung des medizinisch-technischen Geräts vorgenommen wird. Diese Aktivierung kann von dem Gerät selbst nach dem Erkennen der Fehlfunktion des Anzeigegeräts veranlasst werden. Diese Aktivierung kann auch von einer Bedienungsperson über einen dafür vorgesehenen Schalter vorgenommen werden. Es ist auch möglich, dass das medizinisch-technische Gerät auch im Normalbetrieb über diese Spracherkennungsschnittstelle gesteuert wird.

Alles in allem können also Funktionsstörungen von Anzeigeeinrichtungen von medizinisch-technischen Geräten frühzeitig erkannt werden. Gegebenenfalls ist auch ein gesicherter Weiterbetrieb eines solchen Gerätes realisierbar.

Dies erweist sich insofern als vorteilhaft, als die Anzeigeeinrichtung häufig die Hauptbenutzerschnittstelle des medizinisch-technischen Geräts darstellt. Die Bedienungsperson vertraut darauf, wesentliche Informationen jederzeit durch eine funktionsfähige Anzeigeeinrichtung angezeigt zu bekommen. Ein Totalausfall der Anzeigeeinrichtung wurde bisher nicht notwendigerweise sofort erkannt, da die Anzeigeeinrichtung nicht dauernd beobachtet wurde. Geschah also ein solcher Totalausfall während der Abwesenheit des Bedienungspersonals, konnten Probleme auftreten, wenn das Bedienungspersonal bei einem vielleicht später ausgelösten Alarmzustand des ansonsten noch funktionsfähigen medizinisch-technischen Gerätes keinerlei Informationen über den Alarmzustand erhielt und das Gerät dann ohne genauere Kenntnis des Alarmzustand bedienen musste. Aber auch wenn kein Alarmzustand ausgegeben wurde, wurde die Bedienung zu einem späteren Zeitpunkt erschwert, weil das Bedienungspersonal keinerlei Angaben über die in der Zwischenzeit erfolgte Behandlung erhielt. Soweit bei Geräten mit einem aktivierten Bildschirmschoner dieser Bildschirmschoner die Anzeigeeinrichtung dunkel geschaltet hat, war ein Funktionsausfall auch bei einem "Betrachten" der Anzeigeeinrichtung nicht zu erkennen.

Durch den Einsatz der vorliegenden Erfindung wird demgegenüber ein Ausfall sofort erkennbar. Das Bedienungspersonal kann dann entsprechend reagieren.

Im Hinblick auf die Ausführungsmöglichkeiten der Sensoreinrichtung sei in Kenntnis der Erfindung auf die US-PS 4,342,906 sowie die US-PS 5.850,205 hingewiesen. Diese Patente betreffen Verfahren zur Regelung der Helligkeit bzw. des Kontrastes von Anzeigeeinrichtungen. Im Rahmen dieser Regelung ist auch eine Sensoreinrichtung vorgesehen, mit der die Bildschirmhelligkeit erfasst werden kann. Diesen Patentschriften ist jedoch kein Hinweis zu entnehmen, eine Funktionsprüfung der Anzeigeeinrichtungen vorzunehmen. Dies gilt insbesondere für den Fall, dass diese Anzeigeeinrichtungen Teil eines medizinisch-technischen Geräts sind, wobei sich eine solche Funktionsprüfung als besonders vorteilhaft erweist.

Ein Ausführungsbeispiel der Erfindung ist in der Zeichnung näher dargestellt. Es zeigt dabei im einzelnen:
- Figur 1:: eine Anzeigeeinrichtung mit einer Sensoreinrichtung,
- Figur 2:: eine Darstellung von Funktionsblöcken zur Realisierung des erfindungsgemäßen Verfahrens und
- Figur 3:: eine weitere Darstellung einer Anzeigeeinrichtung mit einer Sensoreinrichtung.

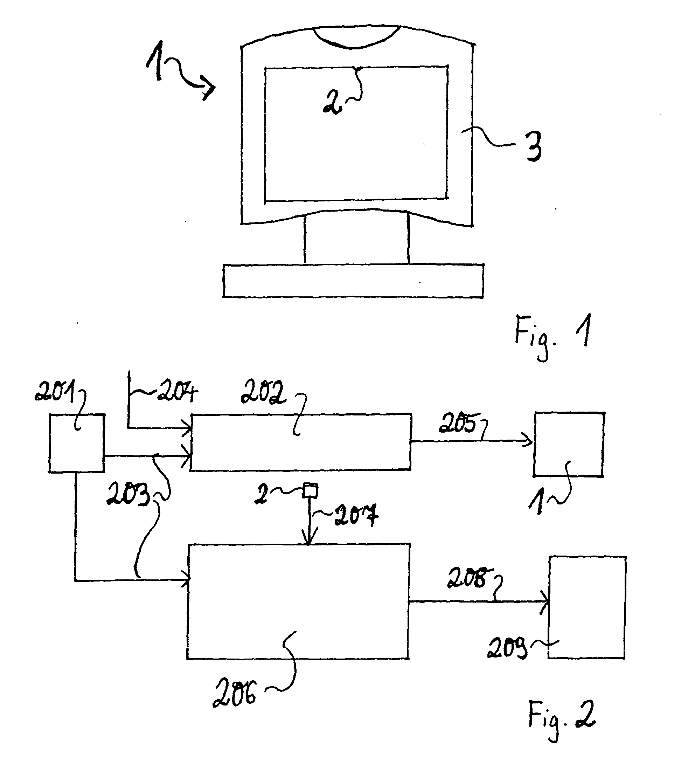

Figur 1 zeigt eine Anzeigeeinrichtung 1, vor der eine Sensoreinrichtung 2 angebracht ist. Die Sensoreinrichtung 2 befindet sich im oberen Teil der Darstellungsfläche der Anzeigeeinrichtung 1 in der Mitte. Die Sensoreinrichtung 2 kann beispielsweise integriert sein in einen Rahmen 3, der die Darstellungsfläche der Anzeigeeinrichtung 1 umgibt.

Mit der Sensoreinrichtung 2 kann beispielsweise ein Quadrat von 2x2 Pixeln beobachtet werden. Diese Pixel geben ein Reaktionssignal ab auf ein Referenzsignal, das beispielsweise darin bestehen kann, diese Pixel mit einer Frequenz von 1 Hz im Wechsel hell/dunkel anzusteuern.

Dieses Reaktionssignal kann mit der Sensoreinrichtung 2 erfasst werden. Durch eine Auswertung des Ausgangssignals dieser Sensoreinrichtung kann also ausgewertet werden, ob das mit der Sensoreinrichtung erfasste Reaktionssignals dem aufgrund des Referenzsignals erwarteten Reaktionssignal entspricht.

Dadurch wird eine Funktionsstörung der Anzeigeeinrichtung 1 erkennbar.

Figur 2 zeigt eine Darstellung des erfindungsgemäßen Verfahrens anhand von Funktionsblöcken.

Gemäß dem Funktionsblock 201 wird ein Referenzsignal 203 erzeugt. Dies kann beispielsweise so erfolgen, dass über das Referenzsignal eine Bildschirmsteuereinheit 202 angesteuert wird, um ein Quadrat von 2x2 Pixeln mit einer Frequenz von 1 Hz im Wechsel hell/dunkel anzusteuern.

Vorteilhaft weist die Bildschirmsteuereinheit 202 verschiedene Eingänge auf. Dies ist zum einen der Eingang, über den das Referenzsignal eingegeben wird. Über einen weiteren Eingang können andere Ansteuersignale 204 eingegeben werden, die die Anzeige von Informationen auf der Anzeigeeinheit betreffen. Abhängig von den Ansteuersignalen 204 kann ein Bildschirmschoner aktiviert sein, mit dem beispielsweise die Anzeigeeinrichtung dunkel geschaltet wird. Diese Dunkelschaltung kann durch eine Eingabe einer Bedienungsperson deaktiviert werden, um die Informationen wieder sichtbar zu machen. Ebenso kann dieser Bildschirmschoner deaktiviert werden, wenn sich die darzustellenden Informationen entsprechend den Ansteuersignalen 204 ändern.

Von der Bildschirmsteuerung 202 werden die darzustellenden Informationen angezeigt, wenn der Bildschirmschoner nicht aktiviert ist.

Unabhängig davon, ob ein Bildschirmschoner aktiviert ist, wird auf ein Referenzsignal 203 hin von der Bildschirmsteuerung 202 ein Ausgangssignal 205 ausgegeben, aufgrund dessen die Anzeigeeinrichtung 1 bei ordnungsgemäßer Funktion das Reaktionssignal ausgibt.

Das Referenzsignal 203 wird gleichzeitig einer Auswerteeinheit 206 zugeführt. In dieser Auswerteeinheit 206 wird abhängig von dem Referenzsignal 203 ein erwartetes Sensorsignal ermittelt. Der Auswerteeinheit 206 wird weiterhin ein Sensorsignal 207 der Sensoreinrichtung 2 zugeführt. Wenn die Anzeigeeinrichtung 1 ordnungsgemäß funktioniert, muss das Sensorsignal 207 dem ermittelten erwarteten Sensorsignal entsprechen.

Wenn das Sensorsignal 207 nicht diesem erwarteten Sensorsignal entspricht, wird eine nicht ordnungsgemäße Funktion erkannt. Es wird dann ein Alarmsignal 208 mittels einer Alarmeinrichtung 209 ausgegeben. Diese Alarmeinrichtung 209 kann beispielsweise ein akustisches Signal ausgeben und/oder über ein Kabel mit einer weiteren Alarmausgabeeinrichtung verbunden sein, die beispielsweise ein optisches oder akustisches Signal ausgibt. Dadurch wird es dann möglich, einen Alarm auch in einem anderen Raum wahrnehmbar zu machen als in dem Raum, in dem das Gerät steht.

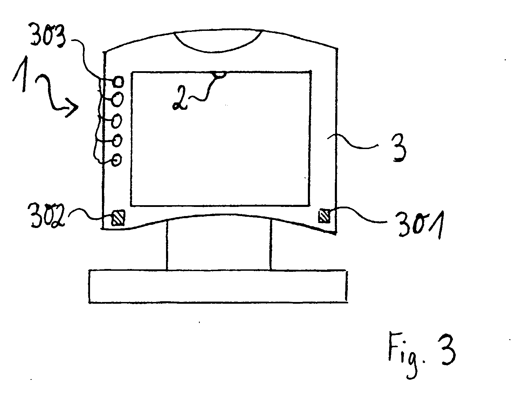

Figur 3 zeigt eine weitere Darstellung einer Anzeigeeinrichtung 1 mit einer Sensoreinrichtung 2, bei der gleiche Bauteile wie in Figur 1 mit denselben Bezugszeichen versehen sind.

Weiterhin ist zu sehen, dass bei der Anzeigeeinrichtung eines medizinisch-technischen Gerätes entsprechend der Darstellung der Figur 3 ein Lautsprecher 301 vorhanden ist. Über diesen Lautsprecher 301 kann das Alarmsignal ausgegeben werden. Damit entspricht also dieser Lautsprecher 301 der Einrichtung 209 der Figur 2 zur Ausgabe des Alarmsignals. Weiterhin kann nach der erkannten Fehlfunktion über diesen Lautsprecher 301 eine Benutzerführung zur weiteren Bedienerführung des medizinisch-technischen Geräts erfolgen.

Es ist zu sehen, dass außer diesem Lautsprecher 301 noch eine Spracherkennungsschnittstelle 302 vorhanden ist, die als Mikrophon ausgebildet ist. Über diese Spracherkennungsschnittstelle 302 können Befehle des Benutzers zur Steuerung des medizinisch-technischen Geräts vorgegeben werden. Diese Spracherkennungsschnittstelle kann dauerhaft aktiviert sein, um eine Steuerung des medizinisch-technischen Geräts auch im Normalbetrieb vorzunehmen. Es ist auch möglich, im Normalbetrieb das medizinisch-technische Gerät über andere Eingabemittel wie beispielsweise einen Touch-Screen, eine Tastatur oder andere Betätigungsmittel zu bedienen, wobei die Spracherkennungsschnittstelle 302 nur im Falle einer erkannten Störung aktiviert wird. Dabei kann die Spracherkennungsschnittstelle 302 von dem medizinisch-technischen Gerät selbst aktivierbar sein im Falle einer erkannten Funktionsstörung und/oder durch einen Schalter, der durch eine Bedienungsperson betätigbar ist.

Weiterhin sind bei der Darstellung der Figur 3 Betätigungselemente 303 zu sehen, die als Hardkeys ausgebildet sind. Mit diesen Hardkeys 303 können im Normalbetrieb Grundfunktionen des medizinisch-technischen Geräts schaltbar sein. Im Falle einer erkannten Funktionsstörung kann alternativ oder zusätzlich zur Spracherkennungsschnittstelle 302 eine Steuerung des medizinisch-technischen Geräts über diese Hardkeys 303 erfolgen. Dabei kann jedem dieser Hardkeys eine bestimmte Funktion zugewiesen sein. Vorteilhaft ist die Anzeigeeinrichtung 1 dann so ausgebildet, dass diese Funktion auf dem Bildschirm sichtbar ist, wenn dieser nicht mit Spannung versorgt wird. Dazu kann die Anzeigeeinrichtung als LCD-Display ausgebildet sein, wobei der Hintergrund des LCD-Displays mit entsprechenden Symbolen versehen ist, die die entsprechenden Funktionen der Betätigungselemente im Notbetrieb darstellen. Wenn also dann im Notbetrieb die Anzeigeeinrichtung nicht mehr ansteuerbar ist, werden die entsprechenden Funktionen sichtbar. Bei einer Ansteuerung des LCD-Displays im Normalbetrieb wird die Darstellung des Hintergrundes überdeckt, so dass andere Symbole oder Informationen auf dem LCD-Display darstellbar sind.

Insbesondere wenn den Hardkeys wechselnde Funktionen zugewiesen sind, ist es vorteilhaft, wenn über den Lautsprecher 301 eine Informationsausgabe erfolgt, welche Funktion welchem der Hardkeys 303 gerade zugewiesen ist. Es ist dann auch eine Benutzerführung dahingehend realisierbar, dass einer dieser Hardkeys eine reine Bestätigungsfunktion aufweist. Von der Bedienungsperson werden dann andere Hardkeys betätigt, um eine bestimmte Steuerung zu bewirken. Nachdem diese Hardkeys betätigt wurden, kann von dem medizinisch-technischen Gerät eine Sprachausgabe erfolgen über die eingestellte Steuerung. Der entsprechende Steuervorgang wird dann erst ausgeführt, wenn von der Bedienungsperson wiederum der Hardkey mit der Bestätigungsfunktion betätigt wurde, um sicherzustellen, dass die entsprechende Steuerfunktion auch tatsächlich gewollt war. Dadurch kann vorteilhaft die Bedienungssicherheit verbessert werden auch nach einem Ausfall der Anzeigeeinrichtung.

Weiterhin kann über einen solchen Hardkey mit einer Bestätigungsfunktion auch eine Bestätigung durch die Bedienungsperson eingegeben werden, wenn diese über den Lautsprecher zur Ausführung bestimmter Handlungen angewiesen wird, wie beispielsweise das Verlegen von Infusionsschläuchen, die von dem medizinisch-technischen Gerät nicht unmittelbar kontrollierbar sind.

Die vorliegende Erfindung eignet sich wegen der besonders guten Betriebssicherheit insbesondere für Geräte mit einem extrakorporalen Blutkreislauf wie beispielsweise bei einer Hämodialysemaschine. Insbesondere erweist es sich hierbei als vorteilhaft, dass das Gerät auch bei einer Funktionsstörung der Anzeigeeinrichtung zumindest eingeschränkt bedienbar bleibt, so dass ein für den Patienten sicherer und definierter Betriebszustand erreichbar ist. Das Gerät kann dann vom Patienten getrennt und ausgetauscht werden.

## Patentansprüche

1. Verfahren zur Funktionsprüfung einer Anzeigeeinrichtung eines medizinisch-technischen Gerätes, wobei die Anzeigeeinrichtung ein Bildschirm oder ein Flachbildschirm ist,
**dadurch gekennzeichnet, dass** zumindest ein Teil der Anzeigeeinrichtung (1) mit einem Referenzsignal (202, 203, 205) angesteuert wird, wobei das Referenzsignal (202, 203, 205) unabhängig von den anzuzeigenden Informationen zur Ansteuerung an die Anzeigeeinrichtung (1) gesandt wird, wobei von der Anzeigeeinrichtung (1) bei ordnungsgemäßer Funktion bei einer Ansteuerung mit dem Referenzsignal ein von dem Referenzsignal abhängiges Reaktionssignal ausgegeben wird, wobei mittels einer Sensoreinrichtung (2) das Auftreten des Reaktionssignals überwacht wird, wobei eine nicht ordnungsgemäße Funktion der Anzeigeeinrichtung (1) erkannt wird, wenn von der Sensoreinrichtung (2) kein Signal oder ein von dem erwarteten Reaktionssignal abweichendes Signal sensiert wird, und dass bei einer als nicht ordnungsgemäß erkannten Funktion ein Alarmsignal (208) ausgegeben wird.

2. Verfahren nach Anspruch 1,
**dadurch gekennzeichnet, dass** nur ein Teil der Anzeigeeinrichtung (1) mit dem Referenzsignal angesteuert wird (202, 203, 205).

3. Verfahren nach Anspruch 1 oder 2,
**dadurch gekennzeichnet, dass** das Referenzsignal (203) ein gepulstes Signal ist.

4. Verfahren nach einem der Ansprüche 1 bis 3,
**dadurch gekennzeichnet, dass** ein Bildschirmschoner vorgesehen ist, wobei der Bildschirmschoner durch das Referenzsignal (203) nicht deaktiviert wird und wobei das Reaktionssignal auch bei aktiviertem Bildschirmschoner ausgegeben wird.

5. Verfahren nach einem der Ansprüche 1 bis 4,
**dadurch gekennzeichnet, dass** bei einer erkannten nicht ordnungsgemäßen Funktion der Anzeigeeinrichtung (1) über die Einrichtung (209, 301) zur Ausgabe des Alarmsignals (208) eine Benutzerführung zum Weiterbetrieb des medizinisch-technischen Geräts erfolgt.

6. Verfahren nach Anspruch 5,
**dadurch gekennzeichnet, dass** dem Benutzer Einstellmöglichkeiten von Eingabemitteln beim Weiterbetrieb des medizinisch-technischen Geräts über die Einrichtung (209, 301) zur Ausgabe des Alarmsignals mitgeteilt werden.

7. Verfahren nach Anspruch 5 oder 6,
**dadurch gekennzeichnet, dass** zumindest beim Weiterbetrieb ein Eingabemittel (303) eine Bestätigungsfunktion aufweist, wobei eine Einstellung aufgrund einer vorherigen Betätigung eines anderen Eingabemittels (302, 303) erst ausgeführt wird, wenn diese Einstellung dem Benutzer über die Einrichtung (209, 301) mitgeteilt wurde und der Benutzer daraufhin das Eingabemittel (303) mit der Bestätigungsfunktion betätigt hat.

8. Verfahren nach einem der Ansprüche 5 bis 7,
**dadurch gekennzeichnet, dass** dem Benutzer beim Weiterbetrieb über die Einrichtung (209, 301) zur Ausgabe des Alarmsignals (208) Handlungsanweisungen gegeben werden, wobei der Benutzer die Ausführung der entsprechenden Handlungen durch eine Betätigung eines Eingabemittels (303) mit einer Bestätigungsfunktion bestätigt.

9. Verfahren nach einem der Ansprüche 5 bis 8,
**dadurch gekennzeichnet, dass** die Anzeigeeinrichtung (1) ein LCD-Display ist, wobei Betätigungselemente (303) im Randbereich der Anzeigeeinrichtung (1) angeordnet sind, deren Schaltfunktion auf der Anzeigeeinrichtung (1) darstellbar ist, wobei auf der Anzeigeeinrichtung (1) eine Darstellung von Funktionen dieser Betätigungselemente (303) erfolgt, die deren Funktionen im Weiterbetrieb des medizinisch-technischen Gerätes nach einer erkannten Funktionsstörung der Anzeigeeinrichtung (1) entsprechen, wenn die Anzeigeeinrichtung (1) nicht mit einem Steuersignal angesteuert wird bzw. nicht mit Spannung versorgt wird.

10. Verfahren nach einem der Ansprüche 1 bis 9,
**dadurch gekennzeichnet, dass** das medizinisch-technische Gerät über eine Spracherkennungsschnittstelle (302) verfügt, die dauernd aktiviert ist, vom Benutzer aktivierbar ist oder von dem medizinisch-technischen Gerät aktivierbar ist, über die das medizinisch-technische Gerät durch entsprechende Sprachbefehle steuerbar ist.

11. Medizinisch-technisches Gerät mit einer Anzeigeeinrichtung (1) sowie einer Alarmeinrichtung (209), wobei die Anzeigeeinrichtung ein Bildschirm oder ein Flachbildschirm ist, wobei durch das medizinisch-technische Gerät eine Funktionsprüfung der Anzeigeeinrichtung (1) durchführbar ist (207), wobei im Falle einer negativen Funktionsprüfung der Anzeigeeinrichtung (1) eine Alarmeinrichtung (209) ansteuerbar ist (207, 208) im Sinne einer Ausgabe eines Alarmsignals,
**dadurch gekennzeichnet, dass** zumindest ein Teil der Anzeigeeinrichtung (1) mit einem Referenzsignal (202, 203, 205) ansteuerbar ist (201, 203, 202, wobei das Referenzsignal (202, 203, 205) unabhängig von den anzuzeigenden Informationen zur Ansteuerung an die Anzeigeeinrichtung (1) gesandt wird, wobei von der Anzeigeeinrichtung (1) bei ordnungsgemäßer Funktion bei einer Ansteuerung mit dem Referenzsignal (203) ein von dem Referenzsignal (203) abhängiges Reaktionssignal ausgebbar ist, wobei mittels einer Sensoreinrichtung (2) das Auftreten des Reaktionssignals überwacht wird, wobei eine nicht ordnungsgemäße Funktion der Anzeigeeinrichtung (1) erkennbar ist, wenn von der Sensoreinrichtung (2) kein Signal oder ein von dem erwarteten Reaktionssignal abweichendes Signal sensiert wird (206, 207).

12. Medizinisch-technisches Gerät nach Anspruch 11,
**dadurch gekennzeichnet, dass** nur ein Teil der Anzeigeeinrichtung (1) mit dem Referenzsignal ansteuerbar ist (202, 203, 205).

13. Medizinisch-technisches Gerät nach einem der Ansprüche 11 oder 12,
**dadurch gekennzeichnet, dass** das Referenzsignal (203) ein gepulstes Signal ist.

14. Medizinisch-technisches Gerät nach einem der Ansprüche 11 bis 13,
**dadurch gekennzeichnet, dass** ein Bildschirmschoner vorgesehen ist, wobei der Bildschirmschoner durch das Referenzsignal (203) nicht deaktiviert wird und wobei das Reaktionssignal auch bei aktiviertem Bildschirmschoner ausgegeben wird.

15. Medizinisch-technisches Gerät nach einem der Ansprüche 11 bis 14,
**dadurch gekennzeichnet, dass** bei einer erkannten nicht ordnungsgemäßen Funktion der Anzeigeeinrichtung (1) über die Einrichtung (209, 301) zur Ausgabe des Alarmsignals (208) eine Benutzerführung zum Weiterbetrieb des medizinisch-technischen Geräts durchführbar ist.

16. Medizinisch-technisches Gerät nach Anspruch 15,
**dadurch gekennzeichnet, dass** dem Benutzer Einstellmöglichkeiten von Eingabemitteln beim Weiterbetrieb des medizinisch-technischen Geräts über die Einrichtung (209, 301) zur Ausgabe des Alarmsignals mitteilbar sind.

17. Medizinisch-technisches Gerät nach Anspruch 15 oder 16,
**dadurch gekennzeichnet, dass** zumindest beim Weiterbetrieb einem Eingabemittel (303) eine Bestätigungsfunktion zugeordnet ist, wobei von dem medizinisch-technischen Gerät eine Einstellung aufgrund einer vorherigen Betätigung eines anderen Eingabemittels (302, 303) erst ausgeführt wird, wenn diese Einstellung dem Benutzer über die Einrichtung (209, 301) mitgeteilt wurde und der Benutzer darauf hin das Eingabemittel (303) mit der Bestätigungsfunktion betätigt hat.

18. Medizinisch-technisches Gerät nach einem der Ansprüche 15 bis 17,
**dadurch gekennzeichnet, dass** dem Benutzer beim Weiterbetrieb über die Einrichtung (209, 301) zur Ausgabe des Alarmsignals (208) Handlungsanweisungen mitteilbar sind, wobei die Ausführung der entsprechenden Handlungen durch den Benutzer mittels einer Betätigung eines Eingabemittels (303) mit einer Bestätigungsfunktion bestätigbar sind.

19. Medizinisch-technisches Gerät nach einem der Ansprüche 15 bis 18,
**dadurch gekennzeichnet, dass** die Anzeigeeinrichtung (1) ein LCD-Display ist, wobei Betätigungselemente (303) im Randbereich der Anzeigeeinrichtung (1) angeordnet sind, deren Schaltfunktion auf der Anzeigeeinrichtung (1) darstellbar ist, wobei auf der Anzeigeeinrichtung (1) eine Darstellung von Funktionen dieser Betätigungselemente (303) erfolgt, die deren Funktionen im Weiterbetrieb des medizinisch-technischen Gerätes nach einer erkannten Funktionsstörung der Anzeigeeinrichtung (1) entsprechen, wenn die Anzeigeeinrichtung (1) nicht mit einem Steuersignal angesteuert wird bzw. nicht mit Spannung versorgt wird.

20. Medizinisch-technisches Gerät nach einem der Ansprüche 11 bis 19,
**dadurch gekennzeichnet, dass** das medizinisch-technische Gerät über eine Spracherkennungsschnittstelle (302) verfügt, die dauernd aktiviert ist, vom Benutzer aktivierbar ist oder von dem medizinisch-technischen Gerät aktivierbar ist, über die das medizinisch-technische Gerät durch entsprechende Sprachbefehle steuerbar ist.

## Claims

1. Method for testing the operation of a display device used with medical equipment, said display device being a monitor or flat screen,
**characterised in that** at least part of the display device (1) is controlled using a reference signal (202, 203, 205), said reference signal (202, 203, 205) being transmitted to the display device (1) for the control thereof independently of the information to be displayed, said display device (1), if operating correctly, generating a reaction signal in response to the reference signal, the occurrence of the reaction signal being monitored by a sensor (2), a fault condition of the display device (1) being identified if no signal or a signal that differs from the expected reaction signal is detected by the sensor (2), and that an alarm signal (208) is generated in the event of a fault condition being identified.

2. Method according to claim 1,
**characterised in that** only part of the display device (1) is controlled using the reference signal (202, 203, 205).

3. Method according to claim 1 or 2,
**characterised in that** the reference signal (203) is a pulsed signal.

4. Method according to one of the claims 1 to 3,
**characterised in that** a screensaver is provided, said screensaver not being deactivated by the reference signal (203) and the reaction signal being generated even when the screensaver is activated.

5. Method according to one of the claims 1 to 4,
**characterised in that**, if a fault condition of the display device (1) is identified, a user prompt for the continued operation of the medical equipment is realised via the means (209, 301) for generating the alarm signal (208).

6. Method according to claim 5,
**characterised in that**, for continued operation of the medical equipment, adjustment possibilities offered by the input means are communicated to the user via the means (209, 301) for generating the alarm signal.

7. Method according to claim 5 or 6,
**characterised in that**, at least for continued operation, one input means (303) has an acknowledgement function, an adjustment based on previous actuation of another input means (302, 303) not being performed until this adjustment has been communicated to the user via the means (209, 301) and the user has thereupon actuated the input means (303) with the acknowledgement function.

8. Method according to one of the claims 5 to 7,
**characterised in that**, for continued operation, instructions are communicated to the user via the means (209, 301) for generating the alarm signal (208), the user acknowledging execution of the respective instructions by actuating an input means (303) that has an acknowledgement function.

9. Method according to one of the claims 5 to 8,
**characterised in that** the display device (1) is an LCD display, controls (303) being arranged in the edge area of the display device (1) and the functions which can be switched with said controls being displayable on the display device (1); the functions switchable with these controls (303) are displayed on the display device (1) during continued operation of the medical equipment following identification of a fault condition in the display device (1) due to its not being controlled by a control signal or to failure of the voltage supply.

10. Method according to one of the claims 1 to 9,
**characterised in that** the medical equipment has a speech recognition interface (302) that is permanently activated or can be activated by the user or by the medical equipment, via which interface the medical equipment can be controlled by appropriate voice commands.

11. Medical equipment with a display device (1) and an alarm unit (209), the display device being a monitor or flat screen and the medical equipment being able to test (207) the operation of the display device (1), an alarm unit (209) being controllable (207, 208) such that it generates an alarm signal if the display device (1) is found to be faulty in operation,
**characterised in that** at least part of the display device (1) is controllable (201, 203, 202, 205) using a reference signal (202, 203, 205), said reference signal (202, 203, 205) being transmitted to the display device (1) for the control thereof independently of the information to be displayed, said display device (1), if operating correctly, being able to generate a reaction signal in response to the reference signal (203), the occurrence of the reaction signal being monitored by a sensor (2), a fault condition of the display device (1) being identifiable if no signal or a signal that differs from the expected reaction signal is detected (206, 207) by the sensor (2).

12. Medical equipment according to claim 11,
**characterised in that** only part of the display device (1) is controllable using the reference signal (202, 203, 205).

13. Medical equipment according to one of the claims 11 or 12,
**characterised in that** the reference signal (203) is a pulsed signal.

14. Medical equipment according to one of the claims 11 to 13,
**characterised in that** a screensaver is provided, said screensaver not being deactivated by the reference signal (203) and the reaction signal being generated even when the screensaver is activated.

15. Medical equipment according to one of the claims 11 to 14,
**characterised in that**, if a fault condition of the display device (1) is identified, a user prompt for the continued operation of the medical equipment is feasible via the means (209, 301) for generating the alarm signal (208).

16. Medical equipment according to claim 15,
**characterised in that**, for continued operation of the medical equipment, possibilities for adjusting the input means can be communicated to the user via the means (209, 301) for generating the alarm signal.

17. Medical equipment according to claim 15 or 16,
**characterised in that** at least for continued operation, an acknowledgement function is assigned to an input means (303), an adjustment based on previous actuation of another input means (302, 303) not being performed by the medical equipment until this adjustment has been communicated to the user via the means (209, 301) and the user has thereupon actuated the input means (303) with the acknowledgement function.

18. Medical equipment according to one of the claims 15 to 17,
**characterised in that**, for continued operation, instructions can be communicated to the user via the means (209, 301) for generating the alarm signal (208), execution of the respective instructions being acknowledgeable by the user by actuating an input means (303) that has an acknowledgement function.

19. Medical equipment according to one of the claims 15 to 18,
**characterised in that** the display device (1) is an LCD display, controls (303) being arranged in the edge area of the display device (1) and the functions which can be switched with said controls being displayable on the display device (1); the functions switchable with these controls (303) are displayed on the display device (1) during continued operation of the medical equipment following identification of a fault condition in the display device (1) due to its not being controlled by a control signal or to failure of the voltage supply.

20. Medical equipment according to one of the claims 11 to 19,
**characterised in that** the medical equipment has a speech recognition interface (302) that is permanently activated or can be activated by the user or by the medical equipment, via which interface the medical equipment can be controlled by appropriate voice commands.

## Revendications

1. Procédé pour contrôler le fonctionnement d'un dispositif d'affichage d'un appareil de technique médical, le dispositif d'affichage étant un écran ou un écran plat, **caractérisé en ce que** au moins une partie du dispositif d'affichage (1) est excitée par un signal de référence (202, 203, 205), le signal de référence (202, 203, 205) étant envoyé pour l'excitation au dispositif d'affichage (1) indépendamment des informations à afficher, un signal de réaction dépendant du signal de référence étant émis par le dispositif d'affichage (1) en cas de fonctionnement correct lors d'une excitation avec le signal de référence, l'apparition du signal de réaction étant surveillée par un dispositif de détection (2), un disfonctionnement du dispositif d'affichage (1) étant détecté lorsque le dispositif de détection (2) ne détecte pas de signal ou détecte un signal qui diffère du signal de réaction attendu, et **en ce que** un signal d'alarme (208) est émis lorsque le fonctionnement est considéré comme anormal.

2. Procédé selon la revendication 1, **caractérisé en ce que** seule une partie du dispositif d'affichage 81) est excitée avec le signal de référence (202, 203, 205).

3. Procédé selon la revendication 1 ou 2, **caractérisé en ce que** le signal de référence (203) est un signal pulsé.

4. Procédé selon l'une des revendications 1 à 3, **caractérisé en ce qu'**il est prévu un économiseur d'écran, ledit économiseur d'écran n'étant pas désactivé par le signal de référence (203) et le signal de réaction étant émis même lorsque l'économiseur d'écran est activé.

5. Procédé selon l'une des revendications 1 à 4, **caractérisé en ce que** lorsqu'un fonctionnement anormal du dispositif d'affichage (1) est détecté, un guidage de l'utilisateur est réalisé par le biais du dispositif pour émettre un signal d'alarme (208) afin de permettre la poursuite de l'utilisation de l'appareil de technique médical.

6. Procédé selon la revendication 5, **caractérisé en ce que** des possibilités de réglage de moyens de saisie sont indiquées à l'utilisateur par le biais du dispositif pour émettre un signal d'alarme (209, 301) lors de la poursuite de l'utilisation de l'appareil de technique médical.

7. Procédé selon la revendication 5 ou 6, **caractérisé en ce qu'**un moyen de saisie (303) dispose d'une fonction de confirmation au moins lors de la poursuite de l'utilisation, un réglage sur la base d'un actionnement précédent d'un moyen de saisie (302, 303) n'étant réalisé qu'après que ce réglage a été communiqué à l'utilisateur par le biais du dispositif (209, 301) et que l'utilisateur ensuite a actionné le moyen de saisie (303) avec la fonction de confirmation.

8. Procédé selon l'une des revendications 5 à 7, **caractérisé en ce que** des consignes d'action sont données à l'utilisateur en cas de poursuite de l'utilisation par le biais du dispositif (209, 301) pour émettre le signal d'alarme (208), l'utilisateur confirmant la réalisation de l'action correspondante en actionnant un moyen de saisie (303) avec une fonction de confirmation.

9. Procédé selon l'une des revendications 5 à 8, **caractérisé en ce que** le dispositif d'affichage (1) est un écran LCD, les éléments d'actionnement (303) étant disposés dans le bord du dispositif d'affichage (1) et dont la fonction de commande peut être représentée sur le dispositif d'affichage (1), une représentation de fonctions de ces éléments d'actionnement (303) étant réalisée sur le dispositif d'affichage (1) laquelle correspond à celles des fonctions lors d'une poursuite de l'utilisation de l'appareil de technique médicale après reconnaissance d'un disfonctionnement du dispositif d'affichage (1) lorsque le dispositif d'affichage (1) n'est pas excité par un signal de commande ou n'est pas alimenté en tension.

10. Procédé selon l'une des revendications 1 à 9, **caractérisé en ce que** l'appareil de technique médicale est muni d'une interface de reconnaissance vocale (302) qui peut être activée en permanence, être activée par l'utilisateur ou être activée par l'appareil de technique médicale, et à l'aide de laquelle l'appareil de technique médicale peut être commandé par le biais d'ordres vocaux correspondants.

11. Appareil de technique médicale avec un dispositif d'affichage (1) dans qu'un dispositif d'alarme (209), le dispositif d'affichage étant un écran ou un écran plat, un contrôle du fonctionnement du dispositif d'affichage (1) pouvant être réalisé par l'appareil de technique médicale, en cas d'un contrôle de fonctionnement négatif du dispositif d'affichage (1) un dispositif d'alarme (209) pouvant être excité (207, 208) sous la forme_de l'émission d'un signal d'alarme, **caractérisé en ce que** au moins une partie du dispositif d'affichage (1) peut être excitée (201, 203, 202, 205) par un signal de référence (202, 203, 205), le signal de référence (202, 203, 205) étant envoyé au dispositif d'affichage (1) pour excitation indépendamment des informations à afficher, un signal de réaction dépendant du signal de référence (203) pouvant être émis par le dispositif d'affichage (1) en cas de fonctionnement correct lors d'une excitation avec le signal de référence (203), l'apparition du signal de réaction étant surveillée par un dispositif de détection (2), un disfonctionnement du dispositif d'affichage (1) étant détecté lorsque le dispositif de détection (2) ne détecte pas de signal ou détecte un signal qui diffère du signal de réaction attendu.

12. Appareil de technique médicale selon la revendication 11, **caractérisé en ce que** seule une partie du dispositif d'affichage (1) peut être excitée (202, 203, 205) par un signal de référence.

13. Appareil de technique médicale selon la revendication 11 ou 12, **caractérisé en ce que** le signal de référence (203) est un signal pulsé.

14. Appareil de technique médicale selon l'une des revendications 11 à 13, **caractérisé en ce qu'**il est prévu un économiseur d'écran, ledit économiseur d'écran n'étant pas désactivé par le signal de référence (203) et le signal de réaction étant émis même lorsque l'économiseur d'écran est activé.

15. Appareil de technique médicale selon l'une des revendications 11 à 14, **caractérisé en ce que** lorsqu'un fonctionnement anormal du dispositif d'affichage (1) est détecté, un guidage de l'utilisateur est réalisé par le biais du dispositif (209, 301) pour émettre un signal d'alarme (208) pour permettre la poursuite de l'utilisation de l'appareil de technique médical.

16. Appareil de technique médicale selon la revendication 15, **caractérisé en ce que** des possibilités de réglage des moyens de saisie peuvent être indiquées à l'utilisateur par le biais du dispositif (209, 301) pour émettre un signal d'alarme lors de la poursuite de l'utilisation de l'appareil de technique médical.

17. Appareil de technique médicale selon l'une des revendication 15 ou 16, **caractérisé en ce qu'**une fonction de confirmation est attribuée à un moyen de saisie (303) au moins lors de la poursuite de l'utilisation, un réglage sur la base d'un actionnement précédent d'un autre moyen de saisie (302, 303) n'est réalisé qu'après que ce réglage a été communiqué à l'utilisateur par le biais du dispositif (209, 301) et que l'utilisateur ensuite a actionné le moyen de saisie (303) avec la fonction de confirmation.

18. Appareil de technique médicale selon l'une des revendications 15 à 17, **caractérisé en ce que** des consignes d'action sont données à l'utilisateur par le biais du dispositif (209, 301) pour émettre le signal d'alarme (208) en cas de poursuite de l'utilisation, l'utilisateur pouvant confirmer la réalisation de l'action correspondante en actionnant un moyen de saisie (303) avec une fonction de confirmation.

19. Appareil de technique médicale selon l'une des revendications 15 à 18, **caractérisé en ce que** le dispositif d'affichage (1) est un écran LCD, les éléments d'actionnement (303) étant disposés dans le bord du dispositif d'affichage (1) et dont la fonction de commande peut être représentée sur le dispositif d'affichage (1), une représentation de fonctions de ces éléments d'actionnement (303) étant réalisée sur le dispositif d'affichage (1) laquelle correspond à celles des fonctions lors d'une poursuite de l'utilisation de l'appareil de technique médicale après reconnaissance d'un disfonctionnement du dispositif d'affichage (1) lorsque le dispositif d'affichage (1) n'est pas excité par un signal de commande ou n'est pas alimenté en tension.

20. Appareil de technique médicale selon l'une des revendications 11 à 19, **caractérisé en ce que** l'appareil de technique médicale est muni d'une interface de reconnaissance vocale (302) qui est activée en permanence, peut être activée par l'utilisateur ou être activée par l'appareil de technique médicale, et à l'aide de laquelle l'appareil de technique médicale peut être commandé par le biais d'ordres vocaux correspondants.
